# EUROPEAN PATENT SPECIFICATION

(11) **EP 3 478 090 B1**
(45) Date of publication and mention of the grant of the patent: **28.05.2025**
(21) Application number: 17729117.6
(22) Date of filing: 09.06.2017
(51) Int. Cl.: A23L 27/30

(54) **FLAVORED FOOD AND BEVERAGE PRODUCTS**
AROMATISIERTE LEBENSMITTEL- UND GETRÄNKEPRODUKTE
PRODUITS ALIMENTAIRES ET DE BOISSON AROMATISÉS

(30) Priority: 30.06.2016 US 201662357362 P
(43) Date of publication of application: 08.05.2019
(73) Proprietor: Firmenich SA, 1242 Satigny (CH)
(72) Inventor: DELATTRE, Maxime, 1211 Geneva 8 (CH); DI PIETRO, Angela, 1211 Geneva 8 (CH); CAYEUX, Isabelle, 1211 Geneva 8 (CH); FREROT, Eric, 1211 Geneva 8 (CH)
(74) Representative: Rupp, Christian
(86) International application number: PCT/EP2017/064199
(87) International publication number: WO 2018/001703

(56) References cited:
- EP-A1- 1 909 599
- WO-A1-2017/186299
- CN-A- 101 787 062
- US-A- 3 751 270
- US-A- 3 876 777
- US-A- 3 908 028
- US-A- 3 928 560
- US-A1- 2008 242 740

## Description

### FIELD

The inventions described herein have use in foods and beverages, particularly those that rely on sweeteners and other flavor components and more particularly those that might rely on compounds and ingredients.

### BACKGROUND

Natural products and ingredients found in nature are desirable for use in and as flavors and food ingredients. Compounds that can enhance, confer or modify the perception of the sweetness of a product are also desirable to attain low caloric foods and beverages that have the same perception of sweetness that a comparable product has with more high caloric sweeteners. EP 1 909 599B1 describes a method and product for enhancing the sweetness of sweet substances by mixing hesperetin or its salts , which can be mixed to 4-hydroxy- dihydrochalcones or its salts thereof.

US 2015 31326 discloses a method for enhancing the sweetness of a sweetener by adding to the sweetener hesperetin dihydrochalcone 4-β-D-glucoside.

### SUMMARY

Provided herein is a method of enhancing the sweetness of a sweetener in a beverage or food product comprising adding Hesperetin Dihydrochalcone to the product according to claim 1.

According to the invention, the method of enhancing the sweetness of sweetener in a beverage or food product comprises adding hesperetin Dihydrochalcone to the product in an amount of 2 to 20 ppm by weight of the total weight of the product, wherein the method does not include: - the addition of 10 ppm hesperetin Dihydrochalcone to a chewing gum; and - the addition of 5 ppm or 10 ppm hesperetin Dihydrochalcone to a hard candy; wherein the sweetener is selected from the group consisting of saccharin, 10 aspartame, cyclamate, sucralose, saccharine, stevia, rebauasdioside A, neotame, and acesulfame K. Also provided herein is a beverage or food product, according to claim 4, comprising Hesperetin Dihydrochalcone in an amount of from 2 to 50 ppm, by weight, of the total weight of the product, and a sweetener. The beverage or food product according to the invention comprises hesperetin Dihydrochalcone in an amount of from 2 to 50 ppm, by weight, of the total weight of the product, and a sweetener, wherein the beverage or food product is not selected from the group consisting of: - chewing gum comprising 10 ppm hesperetin Dihydrochalcone; - hard candy comprising 5 ppm or 10 ppm hesperetin Dihydrochalcone; and - carbonated drink comprising 50 ppm hesperetin Dihydrochalcone; wherein the sweetener is selected from the group consisting of saccharin, aspartame, cyclamate, sucralose, saccharine, stevia, rebauasdioside A, neotame, and acesulfame K.

### BRIEF DESCRIPTION OF THE DRAWINGS

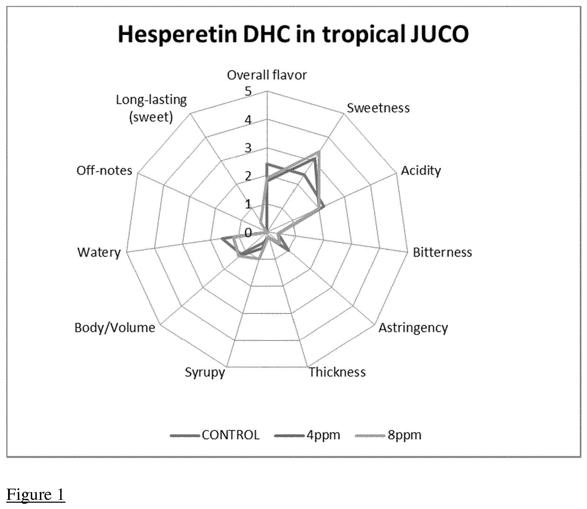

**Figure 1** shows the effect of Hesperetin Dihydrochalcone dosed at 4 ppm and 8 ppm in a tropical juice

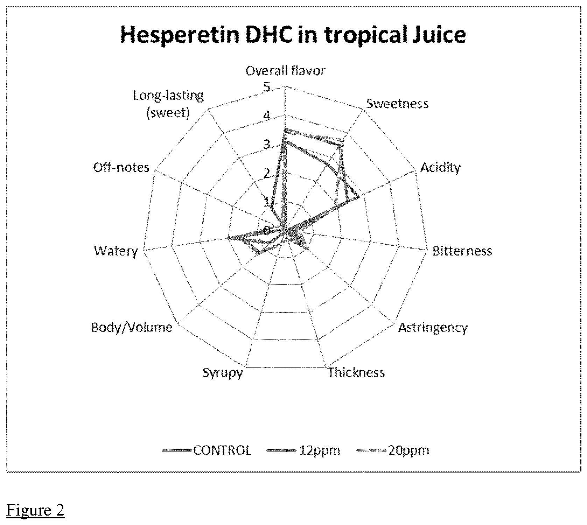

**Figure 2** shows the effect of Hesperetin Dihydrochalcone dosed at 12 ppm and 20 ppm in a tropical juice

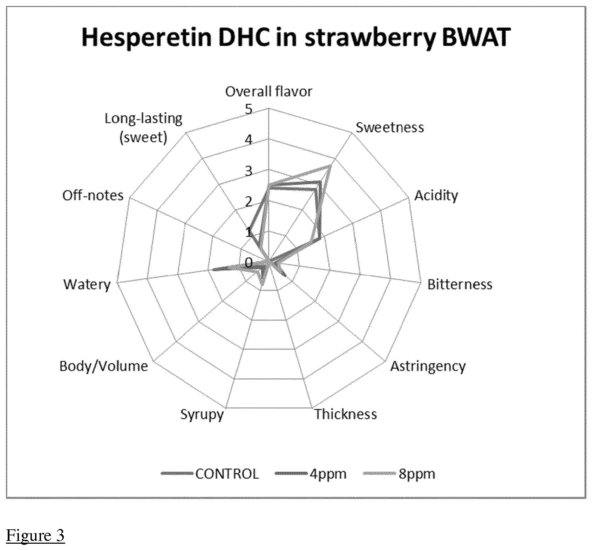

**Figure 3** shows the effect of Hesperetin Dihydrochalcone dosed at 4 ppm and 8 ppm in a strawberry flavored water

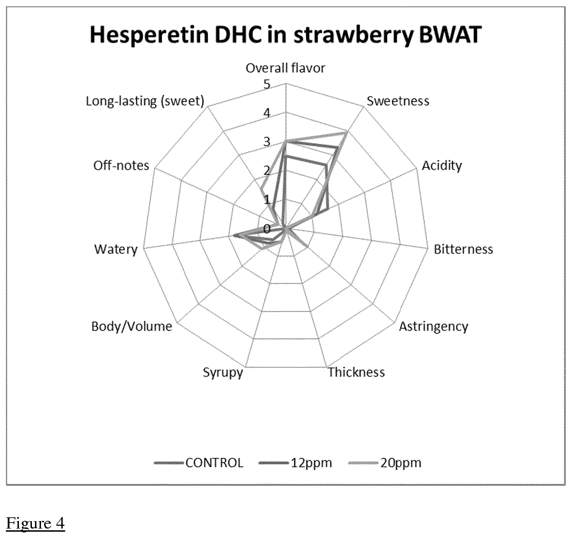

**Figure 4** shows the effect of Hesperetin Dihydrochalcone dosed at 12 ppm and 20 ppm in a strawberry flavored water

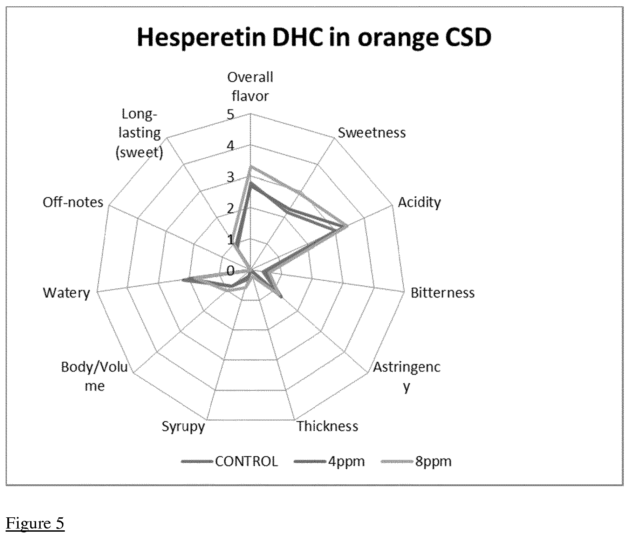

**Figure 5** shows the effect of Hesperetin Dihydrochalcone dosed at 4 ppm and 8 ppm in an orange carbonated soft drink

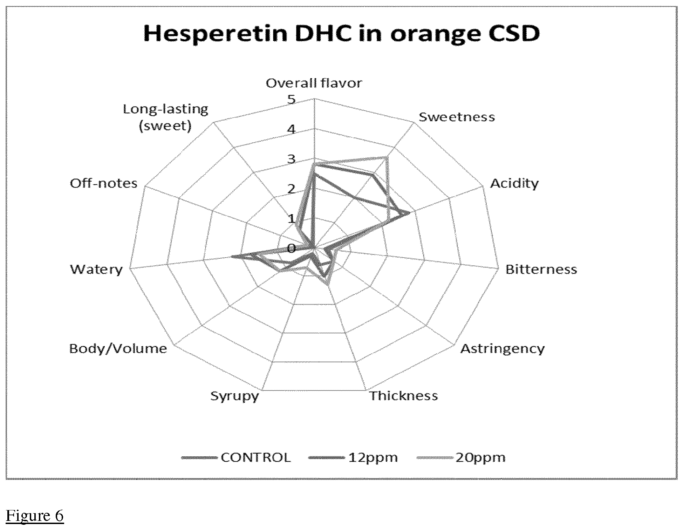

**Figure 6** shows the effect of Hesperetin Dihydrochalcone dosed at 12 ppm and 20 in an orange carbonated soft drink

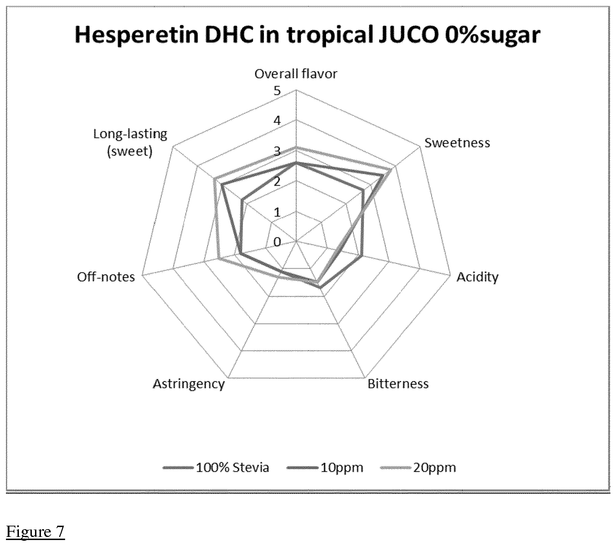

**Figure 7** shows the effect of Hesperetin Dihydrochalcone dosed at 10 ppm and 20 ppm in a stevia sweetened tropical juice

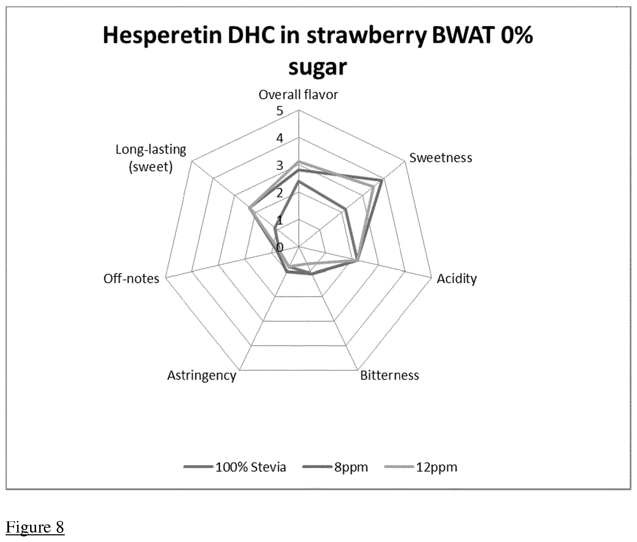

**Figure 8** shows the effect of Hesperetin Dihydrochalcone dosed at 10 ppm and 20 ppm in a stevia sweetened strawberry flavored water

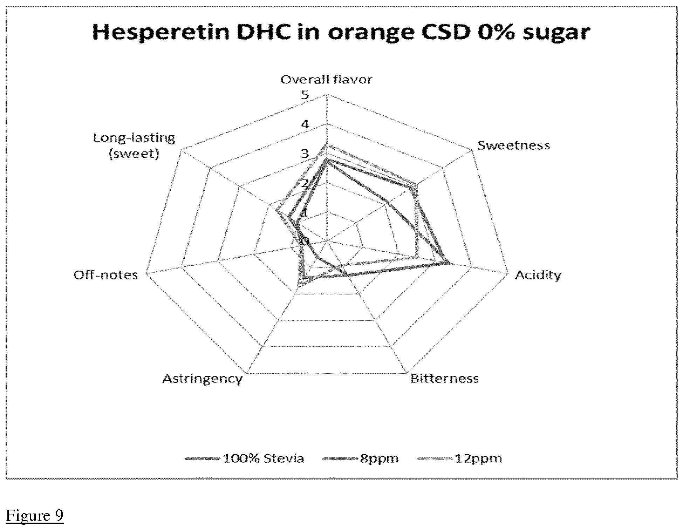

**Figure 9** shows the effect of Hesperetin Dihydrochalcone dosed at 10 ppm and 20 ppm in a stevia sweetened orange carbonated soft drink

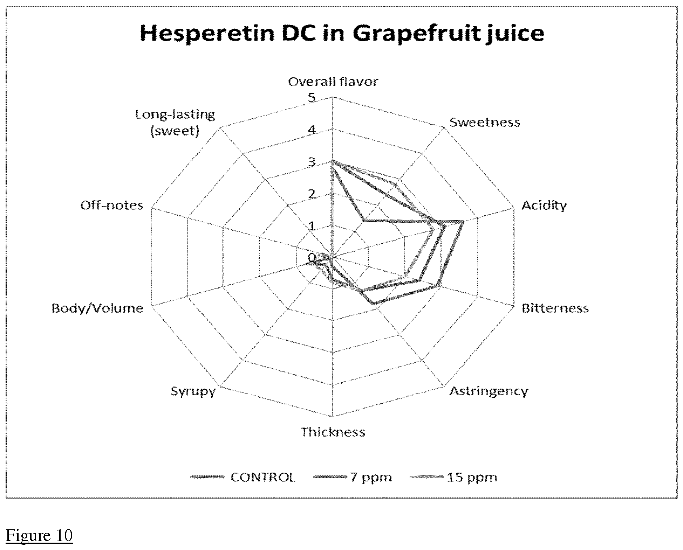

**Figure 10** shows the effect of Hesperetin Dihydrochalcone dosed at 7 ppm and 15 ppm in a grapefruit juice

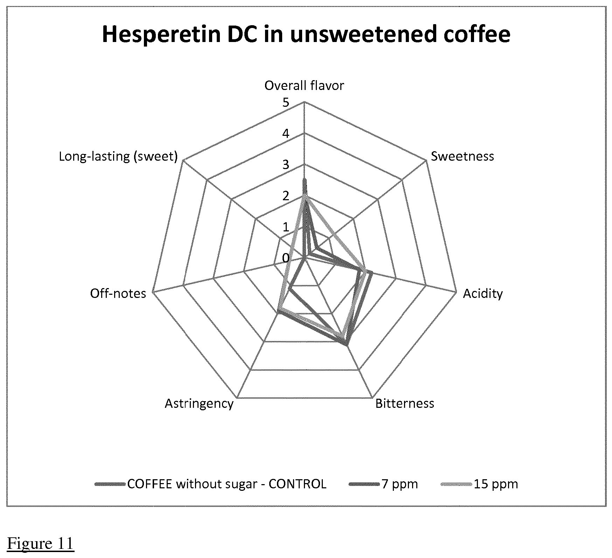

**Figure 11** shows the effect of Hesperetin Dihydrochalcone dosed at 7 ppm and 15 ppm in a sweetened coffee

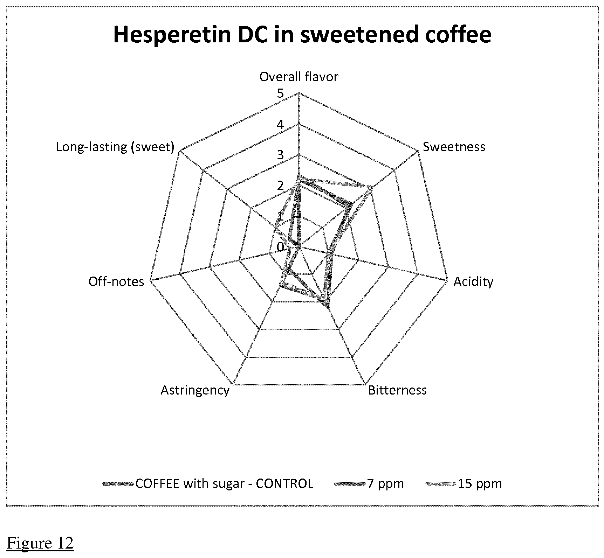

**Figure 12** shows the effect of Hesperetin Dihydrochalcone dosed at 7 ppm and 15 ppm in an unsweetened coffee

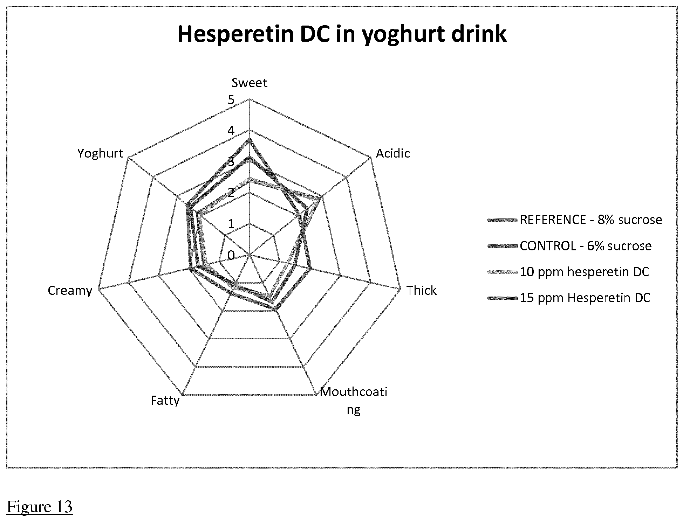

**Figure 13** shows the effect of Hesperetin Dihydrochalcone dosed at 10 ppm and 15 ppm in a yoghurt drink

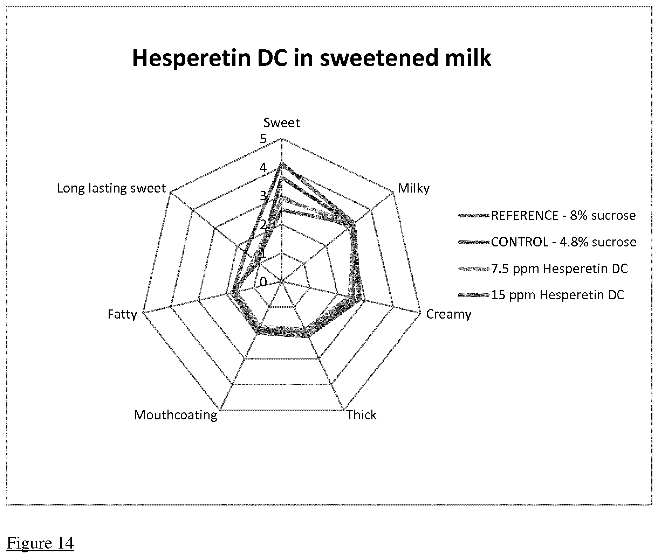

**Figure 14** shows the effect of Hesperetin Dihydrochalcone dosed at 7.5 ppm and 15 ppm in a yoghurt drink

### DETAILED DESCRIPTION

For the descriptions herein and the appended claims, the use of "or" means "and/or" unless stated otherwise. Similarly, "comprise," "comprises," "comprising" "include," "includes," and "including" are interchangeable and not intended to be limiting.

It is to be further understood that where descriptions of various embodiments use the term "comprising," those skilled in the art would understand that in some specific instances, an embodiment can be alternatively described using language "consisting essentially of" or "consisting of."

In one embodiment, Hesperetin Dihydrochalcone is provided in a beverage or food product in an amount of 2 ppm to 20 ppm by weight of the total weight of the beverage or food product, particularly in combination with sucrose or fructose more particularly in combination with 5% sucrose or fructose, by weight of the total weight of the beverage or food product.

In one embodiment, Hesperetin Dihydrochalcone is provided in a beverage or food product in an amount of 4 ppm to 20 ppm by weight of the total weight of the beverage or food product.

In a further embodiment, Hesperetin Dihydrochalcone is provided in a beverage or food product in an amount of 8 ppm to 20 ppm by weight of the total weight of the beverage or food product.

However, when combined with others sweeteners, Hesperetin Dihydrochalcone provides sweetness enhancement to composition comprising a sweetener. In some embodiments, Hesperetin Dihydrochalcone provides a sweetness equivalent to 1-2°brix of sucrose equivalents.

In another embodiment, Hesperetin Dihydrochalcone enhances the overall flavor profile of a beverage or food product, particularly in orange CSD and strawberry flavor bottled water.

In another embodiment, Hesperetin Dihydrochalcone enhances the overall mouthfeel of a beverage or food product.

In another embodiment, the sweetener provided herein is selected from the group consisting common saccharide sweeteners, e.g., sucrose, fructose (e.g., D-fructose),glucose (e.g., D-glucose); sweetener compositions comprising natural sugars, such as corn syrup (including high fructose corn syrup) or other syrups or sweetener concentrates derived from natural fruit and vegetable sources; semisynthetic "sugar alcohol" sweeteners such as erythritol, isomalt, lactitol, mannitol, sorbitol, xylitol, maltodextrin, glycerol, threitol, arabitol, ribitol, and dulcitol; artificial sweeteners such as miraculin, aspartame, superaspartame, saccharin, saccharin-sodium salt, acesulfame-K, cyclamate, sodium cyclamate, and alitame; other sweeteners such as trehalose, melizitose, melibiose, raffinose, palatinose, Iactulose, cyclamic acid, mogroside, tagatose (e.g., D-tagatose), maltose, galactose (e.g., D-galactose), L-rhamnose, D-sorbose, maunose (e.g., D-maunose), lactose, L-arabinose,D-ribose, D-glyceraldehyde, curculin, brazzein, mogroside, Neohesperidin dihydrochalcone (NHDC), neotame and other aspartame derivatives, D-tryptophan, D-Ieucine, D-threonine, glycine, D-asparagine, D-phenylalanine, L-proline, maltitol, hydrogenated glucose syrup (HGS), magap, sucralose, lugduname, sucrononate, sucrooctate, monatin, phyllodulcin, hydrogenated starch hydrolyzate (HSH), stevioside, rebaudioside A, rebaudioside D, rebaudioside M, and other sweet Stevia based glycosides, lo han guo, thaumatin, monellin, carrelameand amd other guanidine-based sweeteners. Particularly, the sweetener is a high potency sweetener, particularly it is selected from the group consisting of saccharin, aspartame, cyclamate, sucralose, saccharine, stevia, rebauasdioside A, neotame, acesulfame K, sucrose, glucose fructose and sorbitol, more particularly it is selected from the group consisting of fructose and stevia.

In a further embodiment the sweetener is selected from the group consisting of sucrose, fructose, and stevia. In a further embodiment, the sweetener comprises a purified stevia extract having a high purity combination of nine sweet steviol glycosides found within the stevia leaf. The purified stevia extract may be represented by high purity combination of nine sweet steviol glycosides found within the stevia leaf wherein Reb A accounts for over half of the final composition (e.g., SG95 sold by PureCircle).

In one embodiment, Hesperetin Dihydrochalcone significantly increases the sweetness intensity of a strawberry flavored bottled water containing 200 ppm of Steviol Glycosides (SG 95 from PureCircle) without significantly impacting any of the other flavor attributes. Moreover, the addition of 20 ppm Hesperetin Dihydrochalcone can maintain the sweetness intensity of a strawberry flavored beverage having a 20 ppm reduced level of SG95.

In another embodiment, 12 ppm Hesperetin Dihydrochalcone significantly increases the sweetness of 200 ppm Steviol Glycosides (SG95 from PureCircle) for example in a Strawberry flavoured bottled water while also increasing the overall mouthfeel intensity, and lingering sweetness intensity.

In another embodiment, 15ppm Hesperetin Dihydrochalcone significantly increases the sweetness of a 6% sucrose yoghurt drink.

In another embodiment, 15ppm Hesperetin Dihydrochalcone significantly increases the sweetness of a sweetened milk (4.8% sucrose added).

The compositions and methods provided herein have use in beverage or food products. When the beverage or food product is a particulate or powdery food, the dry particles may easily be added thereto by dry-mixing. Typical beverage or food products are selected from the group consisting of an instant soup or sauce, a breakfast cereal, a powdered milk, a baby food, a powdered drink, a powdered chocolate drink, a spread, a powdered cereal drink, a chewing gum, an effervescent tablet, a cereal bar, and a chocolate bar. The powdered foods or drinks may be intended to be consumed after reconstitution of the product with water, milk and/or a juice, or another aqueous liquid.

The beverage or food product may be selected from the group consisting of condiments, baked goods, powdery food, bakery filings and Fluid dairy products.

Condiments include, without limitation, ketchup, mayonnaise, salad dressing, Worcestershire sauce, fruit-flavored sauce, chocolate sauce, tomato sauce, chili sauce, and mustard.

Bakery fillings include, without limitation, low or neutral pH fillings, high, medium or low solids fillings, fruit or milk based (pudding type or mousse type) fillings, hot or cold make-up fillings and nonfat to full-fat fillings.

Fluid dairy products include, without limitation, non-frozen, partially frozen and frozen fluid dairy products such as, for example, milks, ice creams, sorbets and yogurts.

Beverage products include, without limitation, carbonated soft drinks, including cola, lemon-lime, root beer, heavy citrus ("dew type"), fruit flavored and cream sodas; powdered soft drinks, as well as liquid concentrates such as fountain syrups and cordials; coffee and coffee-based drinks, coffee substitutes and cereal-based beverages; teas, including dry mix products as well as ready-to-drink teas (herbal and tealeaf based); fruit and vegetable juices and juice flavored beverages as well as juice drinks, nectars, concentrates, punches and "ades"; sweetened and flavored waters, both carbonated and still; sport/energy/health drinks; alcoholic beverages plus alcohol-free and other low-alcohol products including beer and malt beverages, cider, and wines (still, sparkling, fortified wines and wine coolers); other beverages processed with heating (infusions, pasteurization, ultra high temperature, ohmic heating or commercial aseptic sterilization) and hot-filled packaging; and cold-filled products made through filtration or other preservation techniques. SG95 is a natural, high purity combination of nine sweet steviol glycosides found within the stevia leaf. Reb A accounts for over half of the final composition.

The below examples are illustrative only and are not meant to limit the claims or embodiments described herein.

### EXAMPLES

### Example 1

### Sensory tests in model beverages solutions

Twelve model beverage solutions were prepared and tested. The composition and concentrations of the beverages are set forth in Tables 1-3 (grapefruit juice is a market product bought in a Swiss supermarket as well as the coffee).

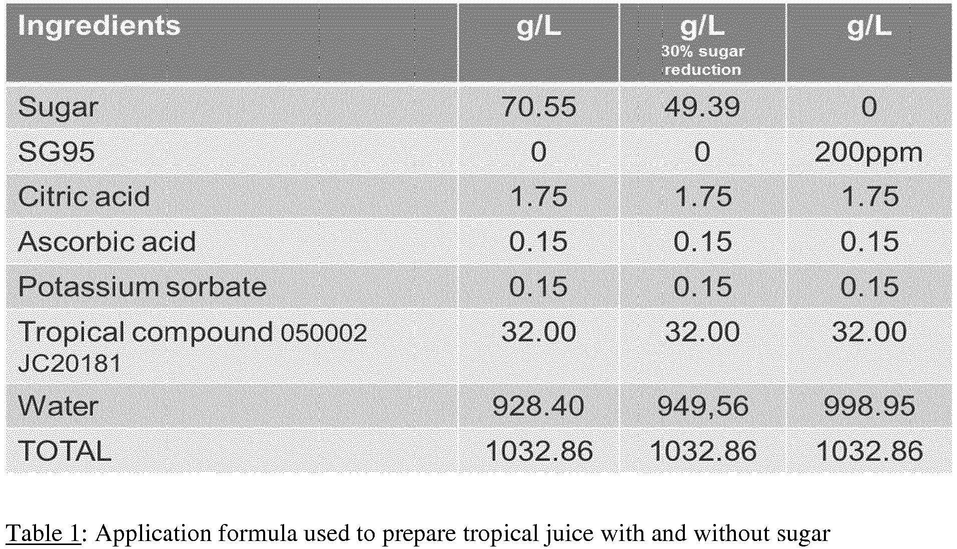

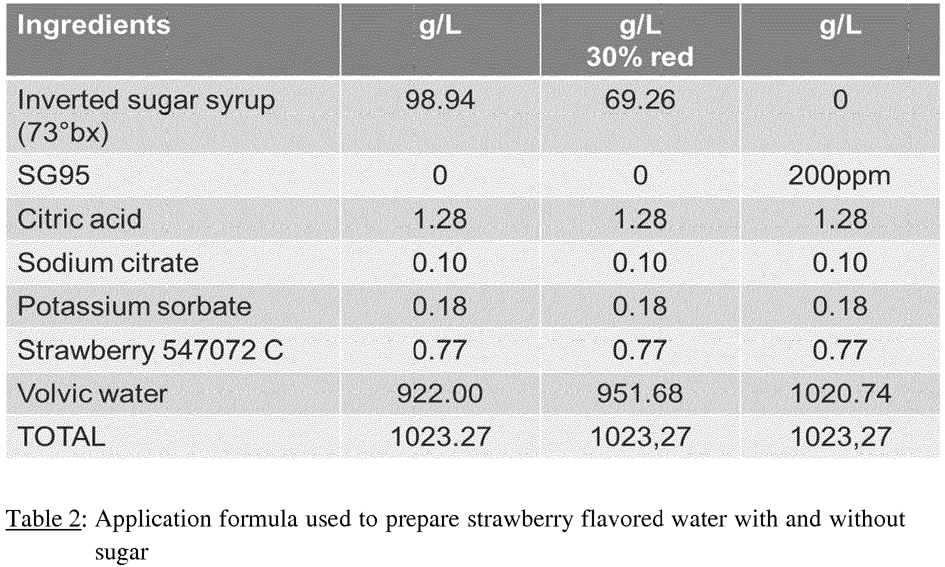

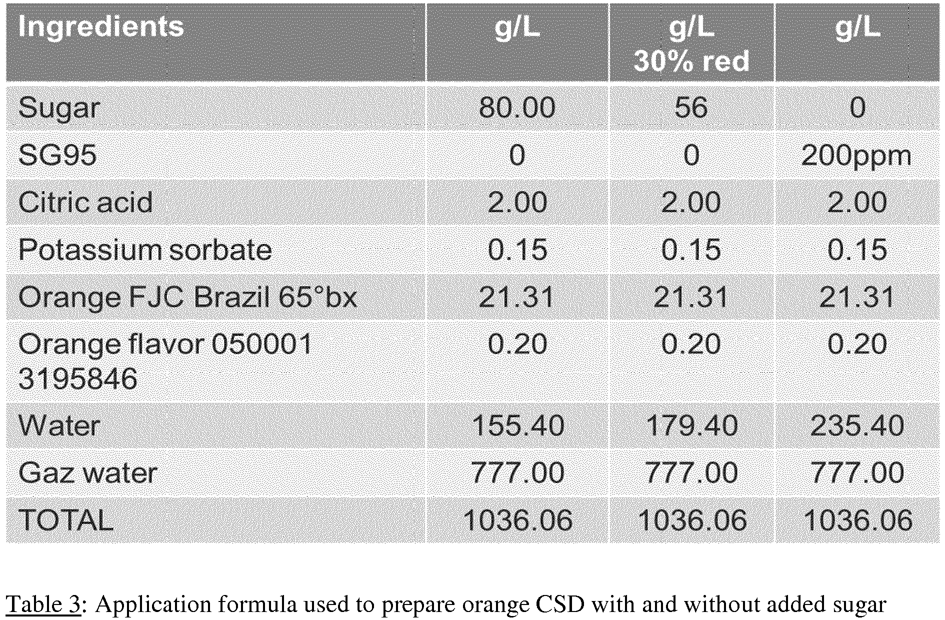

The following observations were made:
1. We observed a positive effect of hesperetin DC on perceived sweetness when dosed at 4ppm and 8ppm in a tropical juice.
2. We observed a positive effect of hesperetin DC on perceived sweetness when dosed at 12ppm and 20ppm. An increase in the overall flavor as well as a decrease on sourness is observedd in presence of Hesperetin DC.
3. We observed a positive effect of hesperetin DC on perceived sweetness when dosed at 4ppm and 8ppm in strawberry flavored water.
4. We observed an increased sweetness perception when hesperetin DC is dosed at 12ppm and 20ppm in strawberry flavored water.
5. An increased sweetness perception is observedd when hesperetin DC is dosed at 8ppm in an orange carbonated soft drink. A higher overall flavor is also shown at this dosage.
6. We observed an increased sweetness perception when hesperetin DC is dosed at 12ppm and 20ppm in an orange carbonated soft drink.
7. An increased sweetness perception is showed when hesperetin DC is dosed at 10ppm and 20ppm in a 0% sugar tropical juice (sweetened with stevia SG95). A reduction of sourness is also perceived in presence of Hesperetin DC.
8. An increased sweetness perception is showed when hesperetin DC is dosed at 8ppm and 12ppm as well as an increase in overall flavor in a 0% sugar flavored water (sweetened with stevia SG95).
9. We observed a positive effect of hesperetin DC on perceived sweetness when dosed at 8ppm and 12ppm in a tropical juice.
10. We observed an increased sweetness, a decreased perceived sourness and a diminution of bitterness and astringency when hesperetin DC is dosed at 7ppm and 15ppm in a 100% grapefruit juice (market product).
11. We observed a positive effect of hesperetin DC on perceived sweetness when dosed at 15ppm in an unsweetened coffee.
12. We observed an increased sweetness perception when hesperetin DC is dosed at 15ppm in a sweetened coffee.

## Claims

1. A method of enhancing the sweetness of sweetener in a beverage or food product comprising adding hesperetin Dihydrochalcone to the product in an amount of 2 to 20 ppm by weight of the total weight of the product,
wherein the method does not include:
- the addition of 10 ppm hesperetin Dihydrochalcone to a chewing gum; and
- the addition of 5 ppm or 10 ppm hesperetin Dihydrochalcone to a hard candy;
wherein the sweetener is selected from the group consisting of saccharin, aspartame, cyclamate, sucralose, saccharine, stevia, rebauasdioside A, neotame, and acesulfame K.

2. The method as recited in claim 1 wherein the amount of hesperetin Dihydrochalcone provided in the product is from about 4 to about 20 ppm by weight of the total weight of the product.

3. The method as recited in claim 2 wherein the amount of hesperetin Dihydrochalcone provided in the product is about 15 ppm by weight of the total weight of the product.

4. A beverage or food product comprising hesperetin Dihydrochalcone in an amount of from 2 to 50 ppm, by weight, of the total weight of the product, and a sweetener,
wherein the beverage or food product is not selected from the group consisting of:
- chewing gum comprising 10 ppm hesperetin Dihydrochalcone;
- hard candy comprising 5 ppm or 10 ppm hesperetin Dihydrochalcone; and
- carbonated drink comprising 50 ppm hesperetin Dihydrochalcone;
wherein the sweetener is selected from the group consisting of saccharin, aspartame, cyclamate, sucralose, saccharine, stevia, rebauasdioside A, neotame, and acesulfame K.

5. The beverage or food product as recited in claim 4, wherein the amount of hesperetin Dihydrochalcone provided in the beverage or food product is from about 4 to about 20 ppm by weight of the total weight of the beverage or food product.

6. The beverage or food product as recited in claim 4, wherein the amount of hesperetin Dihydrochalcone provided in the beverage or food product is about 12 ppm by weight of the total weight of the beverage or food product.

## Patentansprüche

1. Verfahren zur Verbesserung der Süße von Süßungsmittel in einem Getränk oder Lebensmittelprodukt, umfassend das Zugeben von Hesperetin-Dihydrochalcon zu dem Produkt in einer Menge von 2 bis 20 Gew.-ppm des Gesamtgewichts des Produkts,
wobei das Verfahren nicht Folgendes beinhaltet:
- die Zugabe von 10 ppm Hesperetin Dihydrochalcon zu einem Kaugummi und
- die Zugabe von 5 ppm oder 10 ppm Hesperetin-Dihydrochalcon zu einem harten Bonbon;
wobei der Süßstoff aus der aus Saccharin, Aspartam, Cyclamat, Sucralose, Saccharin, Stevia, Rebauasdiosid A, Neotam und Acesulfam K bestehenden Gruppe ausgewählt ist.

2. Verfahren nach Anspruch 1, wobei die in dem Produkt bereitgestellte Menge an Hesperetin-Dihydrochalcon etwa 4 bis etwa 20 Gew.-ppm des Gesamtgewichts des Produkts beträgt.

3. Verfahren nach Anspruch 2, wobei die in dem Produkt bereitgestellte Menge an Hesperetin-Dihydrochalcon etwa 15 Gew.-ppm des Gesamtgewichts des Produkts beträgt.

4. Getränk oder Lebensmittelprodukt, das Hesperetin-Dihydrochalcon in einer Menge von 2 bis 50 Gew.-ppm des Gesamtgewichts des Produkts und ein Süßungsmittel umfasst,
wobei das Getränk oder Lebensmittelprodukt nicht ausgewählt ist aus der Gruppe bestehend aus:
- Kaugummi, das 10 ppm Hesperetin-Dihydrochalcon umfasst;
- Hartbonbons, die 5 ppm oder 10 ppm Hesperetin-Dihydrochalcon umfassen; und
- kohlensäurehaltigen Getränken, die 50 ppm Hesperetin-Dihydrochalcon enthalten;
wobei der Süßstoff aus der aus Saccharin, Aspartam, Cyclamat, Sucralose, Saccharin, Stevia, Rebauasdiosid A, Neotam und Acesulfam K bestehenden Gruppe ausgewählt ist.

5. Getränk oder Lebensmittelprodukt nach Anspruch 4, wobei die in dem Getränk oder Lebensmittelprodukt bereitgestellte Menge an Hesperetin-Dihydrochalcon etwa 4 bis etwa 20 Gew.-ppm des Gesamtgewichts des Getränks oder Lebensmittelprodukts beträgt.

6. Getränk oder Lebensmittelprodukt nach Anspruch 4, wobei die in dem Getränk oder Lebensmittelprodukt bereitgestellte Menge an Hesperetin-Dihydrochalcon etwa 12 Gew.-ppm des Gesamtgewichts des Getränks oder Lebensmittelprodukts beträgt.

## Revendications

1. Procédé pour augmenter le pouvoir sucré d'un édulcorant dans une boisson ou un produit alimentaire, qui comprend l'ajout d'hespérétine dihydrochalcone au produit en une quantité de 2 à 20 ppm en poids par rapport au poids total du produit,
dans lequel le procédé ne comprend pas :
- l'ajout de 10 ppm d'hespérétine dihydrochalcone à un chewing-gum ; et
- l'ajout de 5 ppm ou 10 ppm d'hespérétine dihydrochalcone à un bonbon dur ;
dans lequel l'édulcorant est choisi dans le groupe constitué par la saccharine, l'aspartame, le cyclamate, le sucralose, la saccharine, le stevia, le rébaudioside A, le néotame et l'acésulfame K.

2. Procédé selon la revendication 1, dans lequel la quantité d'hespérétine dihydrochalcone fournie dans le produit est d'environ 4 à environ 20 ppm en poids par rapport au poids total du produit.

3. Procédé selon la revendication 2, dans lequel la quantité d'hespérétine dihydrochalcone fournie dans le produit est d'environ 15 ppm en poids du poids total du produit.

4. Boisson ou produit alimentaire comprenant de l'hespérétine dihydrochalcone en une quantité de 2 à 50 ppm, en poids, du poids total du produit, et un édulcorant,
la boisson ou le produit alimentaire n'étant pas choisi(e) dans le groupe constitué par :
- un chewing-gum comprenant 10 ppm d'hespérétine dihydrochalcone ;
- des bonbons durs comprenant 5 ppm ou 10 ppm d'hespérétine dihydrochalcone ; et
- une boisson gazéifiée comprenant 50 ppm d'hespérétine dihydrochalcone ;
dans lequel l'édulcorant est choisi dans le groupe constitué par la saccharine, l'aspartame, le cyclamate, le sucralose, la saccharine, le stevia, le rébaudioside A, le néotame et l'acésulfame K.

5. Boisson ou produit alimentaire selon la revendication 4, la quantité d'hespérétine dihydrochalcone fournie dans la boisson ou le produit alimentaire étant d'environ 4 à environ 20 ppm en poids du poids total de la boisson ou du produit alimentaire.

6. Boisson ou produit alimentaire selon la revendication 4, la quantité d'hespérétine dihydrochalcone fournie dans la boisson ou le produit alimentaire étant d'environ 12 ppm en poids du poids total de la boisson ou du produit alimentaire.
